(19) Europäisches Patentamt
European Patent Office
Office européen des brevets

(11) Veröffentlichungsnummer: **0 006 174**
**A1**

(12) # EUROPÄISCHE PATENTANMELDUNG

(21) Anmeldenummer: **79101759.3**

(22) Anmeldetag: **05.06.79**

(51) Int. Cl.³: **C 08 G 18/42**, C 09 D 3/72, C 08 G 18/10, D 06 N 3/14, D 06 M 15/52

(30) Priorität: **15.06.78 DE 2826232**

(43) Veröffentlichungstag der Anmeldung: **09.01.80 Patentblatt 80/1**

(84) Benannte Vertragsstaaten: **AT DE FR GB**

(71) Anmelder: **BAYER Aktiengesellschaft, Zentralbereich Patente,Marken und Lizenzen Bayerwerk, D-5090 Leverkusen 1 (DE)**

(72) Erfinder: **Träubel, Harro, Dr., Dresdener Strasse 14, D-5090 Leverkusen (DE)**
Erfinder: **König, Klaus, Dr., Heymannstrasse 50, D-5090 Leverkusen (DE)**
Erfinder: **Pisaric, Karl Heinz, Marderweg 86, D-5024 Pulheim (DE)**
Erfinder: **Loderhose, Ernst, Planckstrasse 14, D-7000 Stuttgart 0 (DE)**

(54) **Verfahren zur Herstellung von Überzügen aus Polyurethanharnstoff-Elastomeren.**

(57) Verfahren zur Direkt- oder Umkehrbeschichtung von Substraten mittels eines Zweikomponenten-Systems, bestehend aus einem NCO-Präpolymeren auf Basis eines Adipinsäure-Mischpolyesters und der Lösung eines aromatischen Diamins als Kettenverlängerungsmittel, wobei man ein aromatisches Diamin mit einer solchen Reaktivität verwendet, daß ein Gemisch aus einer 50 Gew.-%igen Lösung der Präpolymerkomponente in Toluol mit der Kettenverlängererkomponente bei 20°C 3 Minuten nach dem Vermischen eine Viskosität von 1000 bis 15 000 cP aufweist.

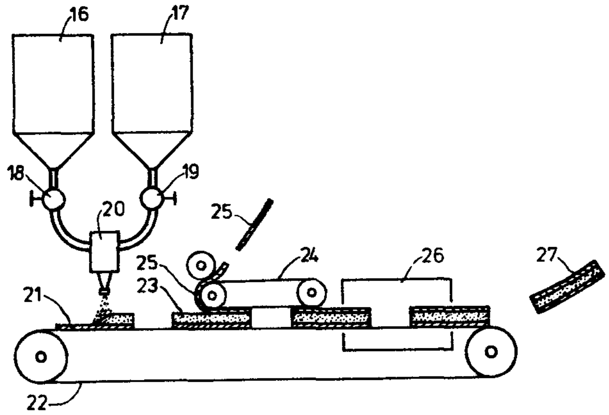


EP 0 006 174 A1

BAYER AKTIENGESELLSCHAFT
Zentralbereich
Patente, Marken und Lizenzen

5090 Leverkusen, Bayerwerk
Sft-by-kl

## Verfahren zur Herstellung von Überzügen aus Polyurethanharnstoff-Elastomeren

Die Beschichtung von Substraten wie Leder, Spaltleder oder Textilien mit Polyurethanen nach dem Reaktivverfahren gehört seit längerem zum Stand der Technik. Beispielsweise seien in diesem Zusammenhang die DE-PS 872 268 (Beispiel 8), die DE-PS 957 564, die DE-AS 1 023 449, die DE-PS 1 240 656, die US-PS 3 194 793 und insbesondere die DE-AS 1 570 524 genannt. Bei dem Verfahren der letztgenannten deutschen Auslegeschrift spritzt man ein gegebenenfalls in einem Lösungsmittel gelöstes Vorpolymeres, welches aus einem Polyätherpolyol und einem Polyisocyanat in einem NCO/OH-Verhältnis zwischen 1,5 und 3 hergestellt wurde, zusammen mit einem in einem Lösungsmittel gelösten organischen Diamin auf die zu beschichtende Unterlage, wobei das Äquivalentverhältnis zwischen Amino- und Hydroxylgruppen über 0,5 und das Äquivalentverhältnis zwischen den Isocyanatgruppen und der Summe aus Hydroxyl- und Aminogruppen zwischen 0,95 und 1,6 liegen soll.

Im Labormaßstab lassen sich Polyurethanharnstoffelastomere zwar aus den verschiedenartigsten in den eben genannten Druckschriften beschriebenen Ausgangskomponenten sowie unter Einhaltung der unterschiedlichsten Mischungsverhältnisse dieser Ausgangskomponenten herstellen. Die Übertragung solcher Rezepturen auf technische Anlagen gelingt jedoch in aller Regel nicht, weil einerseits auf die Verarbeitbarkeit der Reaktionspartner (Viskosität, Reaktivität etc.) Rücksicht genommen werden muß und weil andererseits im allgemeinen sehr hohe Anforderungen an das physikalische Eigenschaftsniveau von Polyurethanbeschichtungen gestellt werden. Hierbei tritt die Schwierigkeit auf, daß die gewünschten Eigenschaften des Polyurethanharnstoffs (Hydrolysenfestigkeit; hohe Knickbeständigkeit; Zugfestigkeit; Kälteflexibilität) zueinander in Widerspruch stehen: Produkte mit großer Hydrolysenfestigkeit und Zugfestigkeit haben geringe Knickbeständigkeit und Kälteflexibilität und umgekehrt. Der Nachteil von Polyäther-Polyurethanharnstoffen gemäß DE-AS 1 570 524 liegt z.B. in ihrer zu geringen Zugfestigkeit und Knickbeständigkeit, um beispielsweise mit ihnen beschichtete textile Substrate oder Leder zu Schuhen verarbeiten zu können.

Ein entscheidender Nachteil der bisher bekannten Beschichtungsverfahren mit Polyurethan-Reaktivsystemen sind die Probleme, welche bei einer Übertragung der Verfahrensweisen auf technische Anlagen auftreten. Werden die Einzelkomponenten

z.B. durch externe Mischung, d.h. durch Verwirbeln zweier Flüssigkeitsstrahlen in der Luft, wie es gemäß DE-AS 1 570 524 bevorzugt ist, vereinigt, dann läßt sich im allgemeinen keine gute und gleichmäßige Vermischung der Reaktionspartner erreichen (P. Arbaud, Technicuir, Nr. 2, Februar 1970, Seite 29). Es entstehen deshalb in der Beschichtung Zonen unterschiedlicher physikalischer Eigenschaften, insbesondere hinsichtlich Lichtechtheit, Knickbeständigkeit und Reißfestigkeit (vgl. H. Träubel, "Polyurethanes in Leather Finishing and Coating", J. of the Soc. of Leather Techn. and Chem. 57, Seite 61 (1973)).

Es wurde nunmehr gefunden, daß sich die erwähnten Schwierigkeiten vermeiden lassen, wenn man bei der Reaktivbeschichtung einerseits speziell ausgewählte, Isocyanatgruppen aufweisende Voraddukte und andererseits bestimmte organische Diamine als Kettenverlängerungsmittel und darüber hinaus vorzugsweise noch Polysiloxane als Verlaufmittel einsetzt. Es wurde außerdem gefunden, daß es von Vorteil ist, entgegen der Lehre der DE-AS 1 570 524 zum Auftragen der Reaktivbeschichtung auf das Substrat Spritzpistolen mit Innenmischung einzusetzen.

Gegenstand der vorliegenden Erfindung ist ein Verfahren zur Direkt- oder Umkehrbeschichtung von Substraten mittels eines Zweikomponentensystems, bestehend aus

a) einem gegebenenfalls ein inertes organisches Lösungsmittel und/oder einen Weichmacher enthaltenden, NCO-Gruppen aufweisenden Präpolymeren, welches durch Umsetzung eines Polyisocyanats mit einer Polyhydroxylverbindung mit einem Molekulargewicht zwischen 1000 und 4000 im NCO/OH-Äquivalentverhältnis zwischen 1,5 : 1 und 3 : 1 hergestellt wurde,

b) einem aromatischen Diamin als Kettenverlängerungsmittel, gegebenenfalls

c) einem weiteren inerten organischen Lösungsmittel, gegebenenfalls

d) Wasser sowie gegebenenfalls

e) Katalysatoren und/oder Pigmenten und weiteren an sich bekannten Zusatzstoffen,

durch Sprühauftrag, wobei das Äquivalentverhältnis der NCO-Gruppen des Präpolymeren (a) zu den Aminogruppen des Kettenverlängerungsmittels (b) zwischen 1:1 und 3:1 liegt, welches dadurch gekennzeichnet ist, daß man als NCO-Präpolymeres (a) ein solches auf Basis eines Polyesterpolyols aus

1) Adipinsäure und gegebenenfalls bis zu 10 Mol % (bezogen auf gesamte Säurekomponente des Polyesters) an Phthalsäure und/oder Terephthalsäure,

2) einem Gemisch aus einem Glykol mit 4 bis 6 C-Atomen und einem weiteren, gegebenenfalls in der Alkylkette verzweigten, Glykol mit 2 bis 10, vorzugsweise 4 bis 6, C-Atomen im Molverhältnis 1:9 bis 9:1, sowie gegebenenfalls

3) bis zu 12 Mol %, bevorzugt 2 bis 4 Mol %, bezogen auf Glykolkomponente des Polyesters, an Trimethylolpropan

einsetzt und ein aromatisches Diamin (b) mit einer solchen Reaktivität verwendet, daß ein Gemisch aus einer 50 gew.-%igen Lösung der NCO-Präpolymerkomponente (a) in Toluol mit den Komponenten (b), (c), (d) und (e) bei 20°C 3 Minuten nach dem Vermischen eine Viskosität von 1000 bis 15 000 cP, vorzugsweise 3000 bis 10 000 cP, aufweist.

Die im erfindungsgemäßen Verfahren einzusetzenden NCO-Präpolymeren (Komponente a) werden in an sich bekannter Weise aus einem Polyisocyanat, bevorzugt einem Diisocyanat, und einem Adipinsäurepolyester in einem NCO/OH-Äquivalentverhältnis von 1,5 : 1 bis 3 : 1, vorzugsweise 1,7 : 1 bis 2,3 : 1, hergestellt. Für den Aufbau des Präpolymeren kommen die an sich bekannten aliphatischen, cycloaliphatischen, aromatischen, araliphatischen und heterocyclischen Polyisocyanate, insbesondere Diisocyanate, des Standes der Technik in Frage, wie sie beispielsweise in den DE-Offenlegungsschriften 2 302 564, 2 423 764 und 2 549 372 (US-Patent 3 963 679) und 2 402 840 (US-Patent 3 984 607) sowie der DE-AS 2 457 387 (US-Patent 4 035 213) beschrieben werden. Erfindungsgemäß bevorzugt sind die isomeren Toluylendiisocyanate und Diphenylmethandiisocyanate sowie Hexamethylendiisocyanat; besonders bevorzugt sind 2,4- bzw. 2,6-Toluylendiisocyanat und/oder 4,4'- bzw. 2,4'-Diisocyanatodiphenylmethan.

Als Polyhydroxylverbindung werden beim Aufbau des erfindungsgemäß einzusetzenden NCO-Präpolymeren Polyester

mit einem Molekulargewicht zwischen 1000 und 4000, vorzugsweise 1800 bis 3000, besonders bevorzugt 2000 bis 2400, aus

1) Adipinsäure und gegebenenfalls bis zu 10 Mol % (bezogen auf gesamte Säurekomponente des Polyesters) an Phthalsäure und/oder Terephthalsäure,

2) Glykolen mit 2 bis 10, vorzugsweise 4 bis 6, C-Atomen sowie gegebenenfalls

3) bis zu 12 Mol %, bevorzugt 2 bis 4 Mol %, bezogen auf Glykolkomponente des Polyesters, an Trimethylolpropan

eingesetzt. Besonders bevorzugt verwendet man dabei Adipinsäurepolyester, bei deren Herstellung so viel Trimethylolpropan mitverwendet wurde, daß im Durchschnitt etwa jedes dritte Polyestermolekül 3 Hydroxylgruppen trägt. Für den Aufbau des Adipinsäurepolyesters geeignete Glykole sind z.B. Äthylenglykol, Diäthylenglykol, Triäthylenglykol, Tetraäthylenglykol, 1,2-Propandiol, 1,3-Propandiol, Dipropylenglykol, Tripropylenglykol, 1,4-Butandiol, 2,3-Butandiol, 1,5-Pentandiol, Neopentylglykol, 1,6-Hexandiol und 1,8-Octandiol. Man wendet dabei ein Gemisch von mindestens zwei dieser Diole im Molverhältnis 1 : 9 bis 9 : 1, vorzugsweise 3 : 7 bis 7 : 3 an, wobei mindestens ein Glykol mit 4 bis 6 C-Atomen eingesetzt wird. Bevorzugt sind Gemische aus einem verzweigten Glykol mit 4 bis 6 C-Atomen und einem linearen Glykol mit 4 bis 6 C-Atomen, besonders bevorzugt Gemische aus 1,6-Hexandiol und Neopentylglykol.

Gegebenenfalls können bei der Herstellung des erfindungsgemäß einzusetzenden NCO-Präpolymeren untergeordnete Mengen (weniger als 25 Mol %, vorzugsweise weniger als 10 Mol %, bezogen auf die eben beschriebenen Adipinsäurepolyester) an weiteren, aus der Polyurethanchemie an sich bekannten, im wesentlichen linearen Polyhydroxylverbindungen mit Molekulargewichten zwischen 62 und 10000 eingesetzt werden. Es sind dies neben niedermolekularen Diolen und Triolen Polyester, Polylactone, Polyäther, Polythioäther, Polyesteramide, Polycarbonate, Polyacetale, Vinylpolymere wie z.B. Polybutadiendiole, bereits Urethan- oder Harnstoffgruppen enthaltende Polyhydroxylverbindungen, gegebenenfalls modifizierte natürliche Polyole sowie auch andere Zerewitinoff-aktive Gruppen wie Amino-, Carboxyl- oder Thiolgruppen enthaltende Verbindungen, wie sie in den schon erwähnten DE-Offenlegungsschriften 2 302 564, 2 423 764, 2 549 372, 2 402 840 und 2 457 387 beschrieben sind. Das Präpolymere hat vorzugsweise ein mittleres Molekulargewicht zwischen 1200 und 3000; seine Viskosität soll bei 20°C zwischen 1000 und 10000 cP und bei 70°C zwischen 100 und 8000 cP, betragen. Vorzugsweise liegt sie bei 20°C zwischen 3800 und 5000 cP und bei 70°C zwischen 1000 und 2000 cP. Gegebenenfalls kann man die Viskosität des Präpolymeren durch Zusatz von bis zu 50 Gew.-% eines gegenüber Isocyanaten inerten organischen Lösungsmittels bzw. eines Weichmachers (siehe die technische Lehre der DE-OS 2 448 133) in den angegebenen Bereich bringen. Geeignete inerte Lösungsmittel bzw. Weichmacher sind beispielsweise aromatische Kohlenwasserstoffe wie Benzol, Toluol oder Xylol, halogenierte Kohlenwasserstoffe wie Chlorbenzol, Tetrachlorkohlenstoff oder Perchloräthylen, Dimethylformamid, Tetrahydrofuran,

Dibutylphthalat, Dioctylphthalat, Dioctylsebazinat, Äthylacetat und Äthylenglykolmonomethylätheracetat. Ketone wie Aceton oder Methyläthylketon sind weniger bevorzugt. Besonders bevorzugt ist Toluol.

Für das erfindungsgemäße Verfahren geeignete aromatische Diamine (Komponente b) sind beispielsweise:

1,1-Bis-(4-amino-3methylphenyl)cyclohexan, Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Erfindungsgemäß bevorzugte Kettenverlängerungsmittel sind die isomeren Toluylendiamine, die isomeren Diphenylmethandiamine sowie Diamine der folgenden Formeln

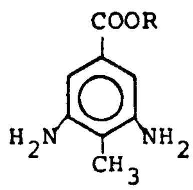 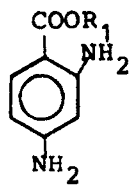 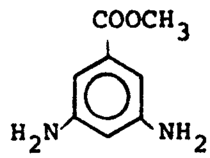 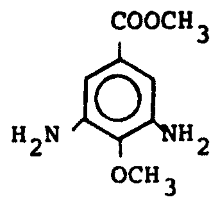

in welchen

R für Methyl, Isopropyl, n-Butyl oder 2-Äthyl-hexyl und

$R^1$ für Methyl oder Isobutyl stehen,

besonders bevorzugt sind 2,4- und 2,6-Diaminotoluol.

Das Kettenverlängerungsmittel wird erfindungsgemäß im allgemeinen in Form einer 5 bis 35 gew.-%igen, vorzugsweise 10 bis 20 gew.-%igen, Lösung in einem organischen Lösungsmittel eingesetzt, welches frei von primären Hydroxylgruppen ist. Neben den bereits obengenannten inerten Lösungsmitteln kommen in diesem Zusammenhang auch Methyläthylketon, Aceton, Isopropanol, Isobutanol und t-Butanol in Frage. NCO-Präpolymeres und Kettenverlängerungsmittel werden erfindungsgemäß in solchen Mengen eingesetzt, daß das Äquivalentverhältnis zwischen Isocyanatgruppen und Aminogruppen zwischen 1 : 1 und 3 : 1, vorzugsweise zwischen 1,03 : 1 und 1,8 : 1, liegt.

Sowohl aus Kostengründen als auch aus verfahrenstechnischen Gründen ist es zweckmäßig, beim erfindungsgemäßen Verfahren möglichst wenig Lösungsmittel mitzuverwenden: Bevorzugt werden erfindungsgemäß die Beschichtungen, welche bei Spaltleder im allgemeinen eine Schichtdicke von 0,15 bis 0,85 mm, vorzugsweise 0,2 bis 0,3 mm, bzw. bei geschliffenem Narbenleder eine Dicke von ca. 0,05 bis 0,6 mm, vorzugsweise 0,1 bis 0,2 mm, aufweisen, in einem Auftrag erzeugt. Enthält das Beschichtungssystem insgesamt mehr als 80 Gew.-% Lösungsmittel, dann kann man keine blasenfreien Beschichtungen dieser Dicke herstellen. Im allgemeinen enthält das erfindungsgemäß eingesetzte Reaktivsystem insgesamt 0 bis 70 Gew.-%, vorzugsweise 5 bis 55 Gew.-%, an Lösungsmittel.

Das Kettenverlängerungsmittel kann erfindungsgemäß auch zusammen mit Wasser eingesetzt werden, welches bekanntlich gegenüber NCO-Präpolymeren ebenfalls als Kettenverlängerungsmittel wirkt. Dies ist vor allem dann zweckmäßig, wenn mit einem deutlichen Überschuß an Isocyanatgruppen gegenüber den Aminogruppen von Komponente (b) gearbeitet wird. Die Menge des Wassers stellt im erfindungsgemäßen Verfahren keine kritische Größe dar, weil die Reaktion der Isocyanatgruppen mit den Aminogruppen in jedem Falle sehr viel rascher als die Reaktion mit Wasser abläuft. Im allgemeinen sollte jedoch die im erfindungsgemäßen Verfahren eingesetzte Lösung des Kettenverlängerungsmittels weniger als 20 Gew.-%, vorzugsweise weniger als 10 Gew.-%, an Wasser enthalten.

Erfindungsgemäß ist es im allgemeinen bevorzugt, dem zur Beschichtung verwendeten Zweikomponentensystem keinen Katalysator zuzusetzen. Arbeitet man jedoch mit Systemen, in welchen das Äquivalentverhältnis zwischen Isocyanatgruppen und Aminogruppen oberhalb von etwa 1,3 : 1, insbesondere oberhalb von etwa 1,6 : 1, liegt und welche daher im allgemeinen Wasser als zusätzliches Kettenverlängerungsmittel enthalten, dann ist es oft zweckmäßig, an sich bekannte Katalysatoren für die Polyisocyanat-Polyadditionsreaktion

mitzuverwenden. Als Katalysatoren kommen z.B. alle an sich bekannten tertiären Amine, Metallsalze und metallorganischen Verbindungen in Frage, wie sie in den oben zitierten deutschen Offenlegungsschriften beschrieben werden. Bevorzugter Katalysator ist Diazabicyclooctan. Die Katalysatoren werden im allgemeinen in einer Menge von ca. 0,01 bis 1 Gew.-%, bezogen auf gesamtes Zweikomponentensystem,eingesetzt.

Erfindungswesentlich ist es, daß das Kettenverlängerungsmittel so ausgewählt wird, daß der Reaktionsansatz eine ausreichende, jedoch nicht zu lange, Reaktionszeit bis zum Verquallen besitzt. Die Reaktionsgeschwindigkeit hängt in erster Linie von der Reaktivität des zum Aufbau des Präpolymeren verwendeten Polyisocyanats bzw. von der Reaktivität der Aminogruppen des aromatischen Diamins ab. Von geringerem Einfluß sind das Molekulargewicht und die Funktionalität des Präpolymeren. Im allgemeinen ist es daher erforderlich, ein reaktives Polyisocyanat mit einem weniger reaktiven aromatischen Diamin bzw. ein weniger reaktives Isocyanat mit einem reaktiven aromatischen Diamin zu kombinieren. Durch geeignete Wahl des Äquivalentverhältnisses von NCO- und Aminogruppen innerhalb des oben angegebenen Bereichs, durch Zusatz von Wasser, durch Variation der Lösungsmittel bzw. der Lösungsmittelmenge sowie durch Mitverwendung von Katalysatoren kann jedoch die Reaktivität des erfindungsgemäß zu verwendenden Zweikomponentensystems in an sich bekannter Weise in relativ weiten Grenzen beliebig gesteuert werden. Ob ein bestimmter Reaktionsansatz (NCO-Präpolymer; Diamin; Lösungsmittel; gegebenenfalls Wasser; gegebenenfalls Katalysator) für das

erfindungsgemäße Verfahren geeignet ist, kann der Fachmann durch folgenden einfachen Vorversuch feststellen:

100 g der einzusetzenden NCO-Präpolymerkomponente (bestehend aus dem Präpolymeren sowie gegebenenfalls Weichmacher bzw. organ. Lösungsmittel) werden in einem Becherglas mit ca. 600 ml Inhalt mit 100 g Toluol vermischt. In einem zweiten Becherglas wird die für das Beschichtungsverfahren vorgesehene Lösung des aromatischen Diamins, gegebenenfalls unter Zusatz von Wasser und/oder Katalysator und den anderen gegebenenfalls mitverwendeten Zusatzstoffen, hergestellt. Diese Lösung des Kettenverlängerungsmittels wird bei 20°C in einem Guß unter Rühren der Präpolymerlösung zugesetzt. Das Gemisch wird bei konstanter Temperatur (20 ± 1°C) gerührt und die Viskosität in Abhängigkeit von der Zeit gemessen. Das untersuchte System ist dann für das erfindungsgemäße Verfahren geeignet, wenn die Viskosität des Reaktionsgemisches nach 3 Minuten zwischen 1000 und 15000 cP, vorzugsweise zwischen ca. 3000 und 10 000 cP, liegt.

Vorzugsweise setzt man der im erfindungsgemäßen Verfahren verwendeten Lösung des Kettenverlängerungsmittels ca. 3 bis 50 Gew.-%, besonders bevorzugt 5 bis 20 Gew.-%, an den in der Beschichtungsindustrie üblicherweise verwendeten organischen oder anorganischen Pigmenten zu. Vorzugsweise sind diese Pigmente mit Carboxylgruppen aufweisenden Polymerisaten bzw. Copolymerisaten formuliert.

Bevorzugt ist es auch, dem im erfindungsgemäßen Verfahren verwendeten Zweikomponentensystem vor dem Aufbringen auf das Substrat ein Verlaufmittel in einer Menge von 0,1 bis 8 Gew.-%, besonders bevorzugt 0,3 bis 3 Gew.-%, bezogen

auf gesamtes Zweikomponentensystem, zuzusetzen. Es kommen in diesem Zusammenhang alle aus der Lackchemie an sich bekannten Verlaufsmittel in Frage, beispielsweise Tributylphosphat, Rizinolsäureester, Fluor-organische Verbindungen, Silikone etc.

Erfindungsgemäß besonders bevorzugt werden Blockmischpolymerisate, welche sowohl Polysiloxan- als auch Polyätherreste enthalten, als Verlaufsmittel eingesetzt. Diese Polyäthersiloxane weisen im allgemeinen ein Molekulargewicht von ca. 1000 bis 5000 auf.

Beim erfindungsgemäßen Verfahren wird das Zweikomponentensystem, wie bereits eingangs erwähnt, durch Sprühen auf die Unterlage aufgetragen, wobei man sich vorzugsweise einer Spritzpistole mit Innenmischung bedient. Vorrichtungen zum Mischen und Auftragen reaktiver fließfähiger Stoffe, beispielsweise von Zweikomponenten-Polyurethanreaktivsystemen bei der Umkehrbeschichtung sind an sich bekannt. Die gemäß Stand der Technik eingesetzten Vorrichtungen weisen jedoch im allgemeinen eine Reihe von Nachteilen auf, wenn in ihnen die erfindungsgemäß zu verwendenden beiden Komponenten, die einerseits schnell miteinander reagieren und andererseits in der Regel große Viskositätsunterschiede aufweisen, verarbeitet werden sollen.

Vorzugsweise benützt man daher für das erfindungsgemäße Verfahren eine neuartige Spritzpistole mit Innenmischung, welche die Nachteile der bisher verwendeten Mischvorrichtungen (geringe Dichtigkeit; Blasenbildung; geringe

Mischgüte; hohe Verweilzeiten) nicht aufweist. In dieser neuartigen Spritzpistole werden die Komponenten zunächst in eine Vormischkammer eingespeist und mit einem Gas vorvermischt und dieses Gas-Flüssigkeitsgemisch unmittelbar nach dessen Bildung einer kurzen, druckverlustarmen statischen Mischvorrichtung mit sich kreuzenden Leitblechen und einem engen Verweilzeitspektrum zugeführt. Dieses erfindungsgemäß bevorzugt verwendete Mischaggregat besteht aus einer zylindrischen Mischkammer mit Einspeisestellen für die einzelnen Komponenten des Beschichtungssystems und für Gas und einer Austrittsöffnung an der Stirnseite der Mischkammer, wobei die Einspeisestellen für mindestens einen Stoff und für das Inertgas so in der Mischkammer eingebaut sind, daß Stoff(e) und Gas näherungsweise tangential in die Mischkammer von der Mantelfläche her einströmen, und die Einspeisestelle(n) für die weiteren Stoffe stromabwärts hin versetzt sind und wobei zwischen Einspeisestellen und Austrittsöffnung eine statische Mischvorrichtung vorhanden ist.

Mit diesen erfindungsgemäß bevorzugten Vorrichtungen wird neben einer sehr guten Vermischung der Reaktionskomponenten ein enges Verweilzeitspektrum in der Mischkammer erreicht. Durch den Drall wird das Absetzen des Gemisches behindert. Der Drall wird in erster Linie durch den tangentialen Eintrag des Inertgases (im allgemeinen Luft) erzielt. Zur Unterstützung des Dralls wird auch vorzugsweise die erste Komponente des Reaktionsgemisches tangential eingeleitet. Die Gasmenge kann soweit gesteigert werden, daß intensive Turbulenz auftritt. Die Zugabe der anderen Reaktivkomponente erfolgt vorzugsweise durch eine weitere stromabwärts angebrachte Einspeisestelle . Auf diese Weise wird ausgeschlossen, daß infolge einer Reaktion der zweiten Komponente mit der ersten Komponente der Eintritt der ersten Komponente in die Mischkammer gestört oder verhindert wird. Vorzugsweise wird die zweite Komponente so zugeführt, daß der Drall verstärkt wird. Es hat sich jedoch gezeigt, daß auch eine radiale Zuführung der zweiten Komponente zu einer befriedigenden Vorvermischung führt. Im allgemeinen wird als erste Komponente der Stoff in der Nähe der Gaszuführungen eingespeist, der am meisten zum Massenstrom beiträgt. Dies bedeutet, daß man bevorzugt das NCO-Präpolymere als erstes einspeist und die Lösung des Kettenverlängerungsmittels mit den gegebenenfalls mitverwendeten Zusatzstoffen stromabwärts zudosiert.

Mit der beschriebenen Mischvorrichtung hat man die Möglichkeit, durch geeignete Ventilstellung beim Anfahren die Zuführung des Vernetzers zeitlich zu verzögern und beim Abschalten die Zudosierung des Vernetzers zeitlich vor das Abschalten des Präpolymeren zu legen. Dadurch lassen sich störende Produktablagerungen im Spritzkopf weitgehend vermeiden, und es ist ein störungsfreier Langzeitbetrieb gewährleistet.

Die Gaseintrittsöffnungen lassen sich auch dazu benutzen, nach Beendigung des Spritzvorganges ein Lösungsmittel/Gas-Gemisch in die Mischkammer einzuleiten; aufgrund der Turbulenz wird die Mischkammer intensiv gereinigt.

Es ist zweckmäßig, wenn in der beschriebenen Spritzpistole die Drallströmung vor dem Eintritt in die statische Mischvorrichtung durch ein Scherelement in mehrere Teilströme aufgeteilt wird. Das Scherelement kann Bestandteil des stromabwärts in die Mischkammer eingebauten statischen Mischers sein. Generell ist von einer solchen statischen Mischvorrichtung eine intensive Vermischung mit kurzer mittlerer Verweilzeit, engem Verweilzeitspektrum, geringem Druckabfall und guter Reinigungsmöglichkeit zu fordern. Eine statische Mischvorrichtung, wie sie beispielsweise in der deutschen Offenlegungsschrift 2 522 106 beschrieben ist, erfüllt die eben genannten Bedingungen.

Die erfindungsgemäß bevorzugt eingesetzte Spritzpistole mit Innenmischung ist in den Figuren 1 bis 3 dargestellt. Eine solche Mischvorrichtung wurde auch in den Beispielen verwendet.

Der Mischkammer 1 werden die beiden Reaktionskomponenten bzw. die Luft über die Ventile 2,3,4 und durch die Eintrittsöffnungen 5,6,7 zugeführt. Im allgemeinen führt man dabei durch Öffnung 6 das (gegebenenfalls in einem inerten Lösungsmittel gelöste) NCO-Präpolymere, durch Öffnung 7 die Lösung des Kettenverlängerungsmittels (gegebenenfalls zusammen mit den Zusatzmitteln) und durch Öffnung 5 die Luft mit einem Druck von ca. 1 bis 5 bar, vorzugsweise ca. 3 bar, ein. In den Figuren 2 und 3 ist zu erkennen, daß die Einlauföffnungen 6, 7 so angeordnet sind, daß sich in der Mischkammer 1 eine turbulente Drallströmung einstellt.

Am oberen Teil der Mischkammer 1 ist ein kegelförmiger Verschlußbolzen 8 vorhanden, der die Drallströmung verstärkt. Bei der Reinigung kann er leicht entfernt werden. Durch eine weitere Zuführung 9, die über das Ventil 10 abgesperrt werden kann, kann Lösungsmittel mit und ohne Luft zu Reinigungszwecken zugegeben werden. Über ein Gestänge 11 werden die Ventile 2,3 gesteuert. Bevorzugt wird das Ventil 2 vor 3 geöffnet und beim Abschalten als letztes von beiden geschlossen. Der untere Teil der Mischkammer 1 wird von einem Scherelement 12 ausgefüllt, welches hier die Form eines Kreuzgitters aufweist. Der statische Mischer 13 mit mehreren einander kreuzenden Leitflächen ist geeignet, Produkte mit großem Viskositätsunterschied schnell bei geringem Druckabfall und engem Verweilzeitspektrum ausreichend zu vermischen. Bei der in den Beispielen verwendeten Spritzpistole hat der statische Mischer 13 einen Durchmesser von 2 cm und eine Länge von 7 cm. Die Mischkammer 1 ist durch eine durchbohrte Verschlußschraube 14 begrenzt. Daran schließt sich die Zerstäubungsdüse 15 an.

Nachdem die Komponenten in der Vormischkammer, im Scherteil und den statischen Mischern vermischt wurden, wird das gebildete Gemisch beim Austritt aus der Vorrichtung unter Luftzerstäubung mit Druckluft(z.B. 3 bar) verdüst und direkt auf die Unterlage (einstweiliger Träger oder zu beschichtendes Substrat) aufgetragen. Der Auftrag erfolgt in der Weise, daß die Mischvorrichtung an einem Changierschlitten befestigt wird, dessen Bewegungsrichtung senkrecht zu einem darunter befindlichen Transportband

verläuft, das gleichmäßig senkrecht zu der Changierbewegung der Vorrichtung fortbewegt wird. Diese Art Beschichtung von Substraten aller Art ist beispielsweise beschrieben in Leder (1974), 162/166.

Wie schon erwähnt, ist das erfindungsgemäße Verfahren sowohl zur Direkt- als auch zur Umkehrbeschichtung der verschiedensten Substrate, insbesondere jedoch von Leder, Spaltleder und textilen Materialien, geeignet. Bei der Direktbeschichtung wird das Zweikomponentensystem auf die Oberfläche des zu beschichtenden Substrats gesprüht und das so beschichtete Material anschließend in an sich bekannter Weise in einen Trockenkanal eingebracht; bei Leder sollen 100°C und bei textilen Trägern 200°C Trockentemperatur nicht überschritten werden. Im allgemeinen trocknet man Eiweiß enthaltende Substrate bei 60-80°C 2-15 Minuten, bevorzugt 3-6 Minuten lang und textile Substrate bei 120-160°C 1-10 (bevorzugt 1-4) Minuten lang. Dabei härtet die Beschichtung aus und das Lösungsmittel verdampft.

Vorzugsweise wird jedoch erfindungsgemäß nach dem Umkehrverfahren gearbeitet. Man kann dabei die üblichen Beschichtungseinrichtungen verwenden, wie sie beispielsweise von H.Träubel in "Das Leder", 1974, Heft 9, (Seite 162) beschrieben werden.Schematisch ist eine derartige für das erfindungsgemäße Verfahren geeignete Beschichtungsanlage in Figur 4 dargestellt: Aus den Vorratsbehältern 16 und 17 werden das NCO-Präpolymer bzw. die Härterlösung über Dosierpumpen 18 und 19 in die Pistole mit Innenmischung 20 gefördert und auf einen einstweiligen Träger 21 gesprüht, welcher mittels eines umlaufenden Stahlbandes 22 an der Spritzpistole vorbeigeführt wird. Dieser einstweilige Träger kann beispielsweise eine Siliconmatrize sein, deren Oberfläche der Narbung von natürlichem Leder nachgebildet ist. In das auf dem einstweiligen Träger befindliche reagierende Gemisch wird mittels einer Kaschieranlage 24 das zu beschichtende Substrat 25 (z.B. Spaltleder) eingelegt. Anschließend wird ein Trockenkanal 26 durchlaufen, in welchem die Beschichtung aushärtet und das Lösungsmittel verdampft wird. Nach dem Verlassen des Trockenkanals wird das beschichtete Substrat 27 vom einstweiligen Träger abgezogen.

Die nachfolgenden Beispiele erläutern das erfindungsgemäße Verfahren. Wenn nicht anders vermerkt, sind Mengenangaben als Gew.-Teile bzw. Gew.-%te zu verstehen. Für die Herstellung der Beschichtungen wurde eine Beschichtungsanlage des Typs ®Transpol 201 der Firma Prodeter (Grenoble, Frankreich) verwendet, wie sie von H.Träubel in "Das Leder", 1974,Heft 9 (Seite 162),beschrieben und in Figur 4 schematisch dargestellt ist. Die Spritzpistole mit Innenmischung war gemäß Figur 1 bis 3 aufgebaut.

Die physikalischen Eigenschaften der in den folgenden Beispielen und Vergleichsbeispielen beschriebenen Beschichtungen wurden nach folgenden Methoden bestimmt:

Zugfestigkeit und Bruchdehnung nach IUP 6 (JSLTC 1958, Seite 389 bis 392), identisch mit DIN 53 328.

Weiterreißfestigkeit: IUP 8 (JSLTC 1960 , Seite 368 bis 370),identisch mit DIN 53 329b.

Knickfestigkeit (Flexometertest): IUP 2 (JSLTC 1963, Seite 126), identisch mit DIN 53 340.

Reibechtheit: nach Veslic bzw. Satra (DIN 53 339).

Lichtechtheit: DIN 54 004.

Beispiel 1 (Vergleichsversuch)

68 g eines Präpolymeren mit einem NCO-Gehalt von 2,47 % (Viskosität bei 20°C: 25 000 cP) aus Polypropylenglykol (Molekulargewicht 2000) und Toluylendiisocyanat (80 % 2,4- und 20 % 2,6-Isomeres) werden in 30 g Methyläthylketon gelöst und in einem Becherglas bei 60°C mit einer Lösung von 3,8 g 4,4'-Diaminodiphenylmethan in 10 g Methyläthylketon vermischt ($NCO/NH_2$-Äquivalentverhältnis: 1,05). Das Reaktionsgemisch wird 5 Sekunden lang intensiv gerührt und danach in einer Schichtdicke von 0,3 mm auf eine Glasplatte gerakelt. Nach dem Ausheizen hat der Film folgende mechanische Eigenschaften:

Flexometertest: weniger als 200000 Knickungen
Zugfestigkeit: 2,6 MPa
Bruchdehnung: 180 %
Weiterreißfestigkeit: 2,0 daN

Beispiel 2 (Vergleichsversuch)

51,9 g eines Präpolymeren mit einem NCO-Gehalt von 5,05 % (Viskosität: 16 000 cP/20°C) aus Polypropylenglykol (Molekulargewicht 1000) und Toluylendiisocyanat werden in 45 g Methyläthylketon gelöst und bei 60°C mit einer Lösung von 5,7 g 4,4'-Diaminodiphenylmethan in 40 g Methyläthylketon vermischt ($NCO/NH_2$-Äquivalentverhältnis: 1,09). Das Reaktionsgemisch wird 5 Sekunden intensiv gerührt und danach in einer Schichtdicke von 0,3 mm auf eine Glasplatte gerakelt. Nach dem Ausheizen und Trocknen werden an dem Film folgende mechanische Werte gemessen:

Flexometertest: Beschädigungen bei weniger als 200000 Knickungen
Zugfestigkeit: 5,2 $MPa/cm^2$
Bruchdehnung: 170 %

Beispiel 3 (Vergleichsversuch)

In einer Beschichtungsanlage analog zu Figur 4, jedoch unter Verwendung einer Spritzpistole mit Außenmischung, werden 490 g/Minute einer Präpolymerkomponente, bestehend aus 2 Teilen des Präpolymeren aus Beispiel 1 und 3 Teilen des Präpolymeren aus Beispiel 2, sowie 257 g/Minute einer Härterlösung verarbeitet. Die Härterlösung besteht aus einem Gemisch von 8 Teilen Methyläthylketon, 2 Teilen 4,4'-Diaminodiphenylmethan und 1 Teil einer 33 %igen Lösung eines gelben Farbstoffes (Solvent Yellow 65) in Dimethylformamid/Äthylenglykolmonomethyläther (1:1). Die Bandgeschwindigkeit betrug 1,1 m/Minute, die Temperatur im Trockenkanal 60°C in der Eingangszone, 80°C im mittleren Bereich und 60°C in der Ausgangszone.

Für Prüfungszwecke wurde zunächst ein Film mit einer Schichtdicke von 0,25 mm hergestellt. Anschließend wurde Spaltleder nach dem Umkehrverfahren mit einer 0,25 mm starken Beschichtung versehen. Sowohl der Film als auch die Beschichtung wiesen auf jeweils 10 $cm^2$ etwa 1 bis 2 Stellen auf, auf denen Verlaufstörungen (sogenannte "Froschaugen") zu erkennen waren. Der Film wurde 3 Stunden lang Sonnenlicht ausgesetzt. Anschließend war er mit braunen, 1 bis 2 mm breiten Flecken übersät, welche ver-

mutlich auf lokale Überdosierungen von 4,4'-Diaminodiphenylmethan zurückzuführen sind. Der Film wies folgende mechanische Eigenschaften auf:

Flexometertest bei 20°C: starke Beschädigungen schon bei weniger als 200000 Knickungen
Flexometertest bei -25°C: starke Beschädigungen schon bei weniger aus 10000 Knickungen
Zugfestigkeit: 3,4 $MPa/cm^2$
Bruchdehnung: 140 %
Weiterreißfestigkeit: 3 kp/cm
Lichtechtheit: weniger als 1 CI (Internationale Blauskala)

Die Beschichtung wies folgende Eigenschaften auf:

Flexometertest bei 20°C: starke Beschädigungen schon bei weniger als 200000 Knickungen
Flexometertest bei -10°C: Beschädigungen schon bei weniger als 10000 Knickungen
Trockenreibechtheit: starke Beschädigungen schon bei 4 Umdrehungen
Heißbügelfestigkeit: starke Beschädigung bei 150°C.

Die Haftung der Beschichtung auf dem Substrat war stellenweise sehr schlecht. Ein Versuch, aus dem beschichteten Spaltleder das Vorderblatt eines Schuhes über einen Leisten zu zwicken, mißlang: Die Polyurethanschicht riß in der Dehnungszone. Das Material ist daher für die Schuhherstellung unbrauchbar.

Beispiel 4 (Vergleichsversuch)

500 g eines linearen Polypropylenglykols (Molekulargewicht: 2000) werden mit 125 g 4,4'-Diisocyanatodiphenylmethan zu einem Präpolymeren mit einem NCO-Gehalt von 2,8 % umgesetzt. Die Kettenverlängerung mit 4,4'-Diaminodiphenylmethan im $NCO/NH_2$-Verhältnis von 1,05 in Chlorbenzol ergibt ein Polyurethanharnstoffelastomer, welches, zu einem Film von 0,25 mm vergossen, im Flexometertest bei 200000 Knickungen bereits Beschädigungen zeigt, eine Zugfestigkeit von 9,5 $MPa/cm^2$ und eine Weiterreißfestigkeit von 23 kp/cm aufweist. Die Heißreibechtheit und Heißbügelfestigkeit des Filmes sind absolut ungenügend.

Beispiel 5 (Vergleichsversuch)

500 g eines Polyesters aus Adipinsäure und Äthylenglykol (530 m Mol OH) werden 1 Stunde lang bei 13 Torr und 110°C entwässert. Der Polyester wird danach bei 110°C 45 Minuten lang mit 132,5 g 4,4'-Diisocyanatodiphenylmethan (1060 m Mol NCO) umgesetzt. Man erhält ein Präpolymeres mit einem NCO-Gehalt von 3,54 %.

26 g des Präpolymeren (20 m Mol NCO) werden in 130 ml Chlorbenzol gelöst und bei 100°C mit einer Lösung von 2 g 4,4'-Diaminodiphenylmethan in 10 g Chlorbenzol (20 m Mol $NH_2$; $NCO/NH_2$-Äquivalentverhältnis = 1,0) versetzt. Das Reaktionsgemisch wird 6 Sekunden lang intensiv gerührt und danach auf eine Glasplatte aufgerakelt.

Nach dem Ausheizen werden die physikalischen Eigenschaften des erhaltenen Films (Schichtdicke: 0,25 mm) bestimmt:

Zugfestigkeit: 45 MPa
Bruchdehnung: 690 %

Nach 4 Wochen Lagerung des Films bei 70°C und 98 % relativer Luftfeuchtigkeit werden die mechanischen Eigenschaften des Films nochmals überprüft:

Zugfestigkeit: 3 MPa
Bruchdehnung: 190 %
Knickfestigkeit bei -25°C: deutliche Beschädigungen bereits bei weniger als 10000 Knickungen.

Eine Wiederholung des Versuches im technischen Maßstab auf einer Anlage des Typs®Transpol 204 ergab Beschichtungen, deren Eigenschaften jenen des oben beschriebenen Filmes entsprachen. Aus beschichtetem Spaltleder wurde ein Fußball hergestellt. Nach mehrstündiger Lagerung bei -10°C wurde der Fußball bespielt. Die Beschichtung platzte bereits nach kurzer Zeit aufgrund der schlechten Kältebeständigkeit des Elastomers.

<u>Beispiel 6</u> (Erfindungsgemäß)

60 Teile eines Polyesters aus Adipinsäure, Hexandiol und Neopentylglykol (Molverhältnis der Diole: 7 : 3) mit einer OH-Zahl von 64 (73,5 Äquivalente OH) werden 1 Stunde

lang bei 110°C im Vakuum entwässert und bei 110°C in Gegenwart von 18,2 Teilen Benzol mit 12,8 Teilen Toluylendiisocyanat (80 % 2,4- und 20 % 2,6-Isomeres; 147 Äquivalente NCO) zu einem Präpolymeren mit einem NCO-Gehalt von 3,2 % umgesetzt (Viskosität bei 20°C: 3500 cP, bei 70°C: 410 cP).

126 g dieses Präpolymeren werden in 40 g Dimethylformamid und 50 g Toluol gelöst und bei 60°C mit einer Lösung von 4,1 g 2,4-Toluylendiamin in 15 ml Toluol unter intensivem Rühren vermischt. Das Reaktionsgemisch wird auf eine Glasplatte gerakelt; nach dem Ausheizen und Trocknen des Filmes (Schichtdicke 0,25 mm) werden seine physikalischen Eigenschaften bestimmt.

Die Meßwerte sind in der folgenden Tabelle zusammengestellt. Die erste Spalte bezieht sich auf den Film unmittelbar nach seiner Herstellung; die zweite Spalte auf einen Film, welcher 2 Wochen bei 70°C und 98 % relativer Luftfeuchtigkeit gelagert wurde und die dritte Spalte auf einen Film, welcher 4 Wochen bei 70°C und 98 % relativer Luftfeuchtigkeit gelagert wurde.

Tabelle 1

| | 1 | 2 | 3 |
|---|---|---|---|
| Zugfestigkeit (MPa) | 21,5 | 19 | 5 |
| Bruchdehnung (%) | 550 | 650 | 230 |
| Weiterreißfestigkeit (daN) | 25 | 38 | 30 |
| Knickbeständigkeit 20°C | > 200000 | > 200000 | > 200000 |
| -10°C | > 100000 | | |
| 20°C (naß) | > 100000 | | |

Der Reaktionsansatz von Beispiel 6 hatte unter den oben angegebenen Standardbedingungen nach 180 Sekunden bei 20°C eine Viskosität von 5400 cP.

Beispiel 7 (Erfindungsgemäß)

Der Reaktionsansatz aus Beispiel 6 wurde auf einer Beschichtungsanlage des Typs HZ 3 SR der Firma Hennecke (Birlinghoven, Deutschland) und später auf einer ®Transpol 201 (Spritzpistole mit Innenmischung) verarbeitet, wobei jedoch das Präpolymer ohne Lösungsmittel eingesetzt wurde. Die folgenden Substrate wurden sowohl nach dem Direkt- als auch nach dem Umkehrverfahren beschichtet: Spaltleder, stark geschliffene Narbenleder, Vliese, Gewirke und Gewebe.

Aus den beschichteten Materialien wurden Sitzkissen hergestellt, die in einem Schwimmbad über 1 Jahr lang im Freien in Benutzung waren. Im Gegensatz zu Kissen, welche mit beschichtetem Spaltleder gemäß Beispiel 3 bzw. Beispiel 5 hergestellt worden waren und welche schon nach 6 Monaten in der Beschichtung völlig zerstört waren, waren die Kissen gemäß vorliegendem Beispiel noch nach 12 Monaten in Ordnung.

Beispiel 8 (Erfindungsgemäß)

Auf einer Beschichtungsanlage des Typs ®Transpol 204 wurden pro Minute 342 g (262 m Mol NCO) des Präpolymeren aus Beispiel 6 und 425 g (250 m Mol $NH_2$) einer Härterlösung verarbeitet. Die Härterlösung war wie folgt zusammengesetzt:

147 Teile 1,1-Bis-(4-amino-3-methylphenyl)-cyclohexan
139 Teile 3-Methyl-2,4-diaminobenzoesäure-(2-äthylhexyl)-ester
2800 Teile Äthylacetat
150 Teile eines formierten Eisenoxidpigments (50 % Eisenoxid, 30 % Cyclohexanon, 20 % eines teilverseiften Vinylchlorid/Vinylacetat-Copolymeren) und
150 g eines Polyätherpolysiloxans der idealisierten Formel

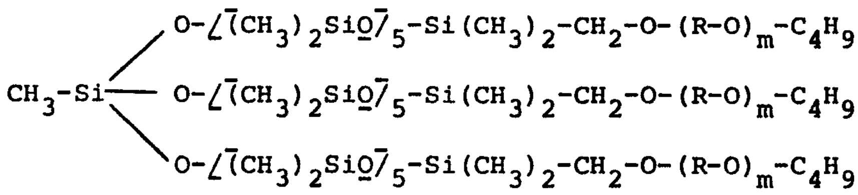

in welcher

m  für eine ganze Zahl zwischen 27 und 35 und

R  für Äthylen- und Propylenreste stehen.

Die Bandgeschwindigkeit betrug 120 cm/Minute. 150 cm von der Auftragsstelle entfernt wurde in die auf einer Siliconmatrize befindliche Reaktionsmischung ein Vlies eingelegt. Nach dem Passieren eines 10 Meter langen Trockenkanals (Temperatur: am Eingang und im mittleren Bereich 80°C; am Ausgang 60°C) wird das beschichtete Vlies von der Matrize abgezogen.

Die Beschichtung hatte folgende physikalische Eigenschaften:

Zugfestigkeit: 10 MPa
Bruchdehnung: 670 %
Weiterreißfestigkeit: 22 daN
Knickfestigkeit: mehr als 200000 Knickungen ohne Beschädigung.

Der Reaktionsansatz hatte unter den oben angegebenen Standardbedingungen nach 3 Minuten bei 20°C eine Viskosität von 1700 cP.

Beispiel 9 (Erfindungsgemäß)

Analog zu Beispiel 8 wurden pro Minute 350 g des Präpolymeren aus Beispiel 6 und 121 g einer Härterlösung verarbeitet. Die Härterlösung hatte folgende Zusammensetzung:

1390 Teile 3-Methyl-2,4-diaminobenzoesäure-(2-äthylhexyl)-ester
2500 Teile Äthylacetat
610 Teile eines formierten Rußpigments (8 % Ruß, 20 % eines teilverseiften Vinylchlorid/Vinylacetat-Copolymeren; 72 % Cyclohexanon) und
150 Teile des Polyäthersiloxans aus Beispiel 8 als Verlaufmittel.

Die erhaltenen Beschichtungen hatten folgende mechanische Eigenschaften:

Zugfestigkeit: 10 MPa
Bruchdehnung: 525 %
Weiterreißfestigkeit: 31 kp/cm
Knickbeständigkeit: bei 20°C trocken mehr als 200000 Knickungen; bei 20°C naß mehr als 100000 Knickungen; bei -10°C mehr als

10 000 Knickungen ohne Beschädigung.
Der Reaktionsansatz hatte unter den oben angegebenen Standardbedingungen nach 3 Minuten bei 20°C eine Viskosität von 1500 cP.

Beispiel 10 (Erfindungsgemäß)

Analog zu Beispiel 8 wurden pro Minute 520 g (400 m Mol NCO) des Präpolymeren aus Beispiel 6 und 130 g (330 m Mol $NH_2$) der folgenden Härterlösung verarbeitet:

400 Teile 2,4-Toluylendiamin
600 Teile Methyläthylketon
400 Teile des gelben Eisenoxidpigments aus Beispiel 8
100 Teile des Verlaufmittels aus Beispiel 8 und
54 Teile Wasser.

Die erhaltenen Filme bzw. Beschichtungen hatten folgende mechanische Eigenschaften:

Zugfestigkeit: 14 MPa
Bruchdehnung: 520 %
Weiterreißfestigkeit: 25 daN
Knickbeständigkeit bei 20°C: mehr als 200000 Knickungen trocken bzw. mehr als 100000 Knickungen naß ohne Beschädigung.

Der Reaktionsansatz hatte unter Standardbedingungen nach 3 Minuten bei 20°C eine Viskosität von 7700 cP.

Beispiel 11

Analog zu Beispiel 8 wurden die folgenden Präpolymeren bzw.

Kettenverlängerungsmittel verarbeitet:

a) (Vergleichsversuch)

19 g (20 m Mol NCO) eines Präpolymeren mit einem NCO-Gehalt von 4,52 % aus 375 Teilen eines Polyesters aus Adipinsäure und Äthylenglykol(OH-Zahl 175), 1500 Teilen eines Polyesters aus Adipinsäure und Äthylenglykol (OH-Zahl 56) und 486 Teilen Toluylendiisocyanat (65 % 2,4- und 35 % 2,6-Isomeres), gelöst in 40 g Chlorbenzol; 2 g (20 m Mol $NH_2$) 4,4'-Diaminodiphenylmethan, gelöst in 5 g Dioxan.

b) (Vergleichsversuch)

20 g (10 m Mol NCO) eines Präpolymeren mit einem NCO-Gehalt von 2,1 % aus 500 Teilen eines Polyesters aus Adipinsäure und Diäthylenglykol (OH-Zahl 41) und 88 Teilen 4,4'-Diisocyanatodiphenylmethan, gelöst in 70 g Chlorbenzol; 1 g 4,4'-Diaminodiphenylmethan, gelöst in 5 g Dioxan.

c) Erfindungsgemäß

27,2 g (20 m Mol NCO) eines Präpolymeren mit einem NCO-Gehalt von 3,2 % aus 500 Teilen eines Polyesters mit einer OH-Zahl von 56 aus Adipinsäure und Äthylenglykol/Butandiol (3 : 7) und 125 Teilen 4,4'-Diisocyanatodiphenylmethan, gelöst in 80 g Chlorbenzol; 2 g 4,4'-Diaminodiphenylmethan, gelöst in 5 g Dioxan.

Die mechanischen Eigenschaften der erhaltenen Beschichtungen bzw. Filme sind in der folgenden Tabelle zusammengestellt:

Tabelle 2

| | | a | b | c |
| --- | --- | --- | --- | --- |
| Zugfestigkeit (MPa) | Nullwert | 42 | 16 | 25 |
| | 2 Wochen Lagerung bei 70 °C/ 98 % Luftfeuchtigkeit | 4,6 | Film zerstört | 9 |
| | 4 Wochen Lagerung bei 70 °C/ 98 % Luftfeuchtigkeit | Film zerstört | Film zerstört | 3 |
| Bruchdehnung ( % ) | Nullwert | 450 | 1100 | 840 |
| | 2 Wochen Lagerung bei 70 °C/ 98 % Luftfeuchtigkeit | 100 | Film zerstört | 400 |
| | 4 Wochen Lagerung bei 70 °C/ 98 % Luftfeuchtigkeit | Film zerstört | Film zerstört | 80 |

Beispiel 12

Analog zu Beispiel 8 werden die folgenden Präpolymer-bzw. Härterlösungen verarbeitet

a) (Vergleichsversuch)

150 g eines Präpolymeren mit einem NCO-Gehalt von 3,0 % aus 500 Teilen eines Polyesters mit einer OH-Zahl von 56 aus Adipinsäure und einem Gemisch von Hexandiol und Neopentylglykol (7 : 3) und 125 Teilen 4,4'-Diisocyanatodiphenylmethan, gelöst in 120 g Toluol; 6,8 g (68 m Mol $NH_2$) 4,4'-Diaminodiphenylmethan, gelöst in 75 g Äthylacetat.

b) (Erfindungsgemäß)

150 g (71 m Mol NCO) des Präpolymeren aus Versuch (a), gelöst in 120 g Toluol; 4,4 g (68 m Mol $NH_2$) 2,4-Toluylendiamin, gelöst in 75 g Äthylacetat.

Bei sonst vergleichbaren mechanischen Eigenschaften ist die Haftung zwischen Beschichtung und Substrat bei den gemäß Versuch a) hergestellten Produkten schlecht, während sie bei den gemäß Versuch b) erhaltenen Materialien sehr gut ist. Dies ist darauf zurückzuführen, daß die Reaktivität des Zweikomponentensystems in Versuch a) zu hoch ist.

Die Viskosität der Ansätze nach Versuch a) und Versuch b) wurde bei konstanter Temperatur (20°C) in Abhängigkeit von der Zeit gemessen. Die Präpolymerkomponente war dabei, wie weiter oben eingehend beschrieben wurde, mit der gleichen Gewichtsmenge Toluol verdünnt.

Bei Versuch b) betrug die Viskosität des Gemisches 3 Minuten nach dem Vermischen ca. 15 000 cP/20°C, während bei Versuch a) 15 000 cP schon nach 60 Sekunden überschritten waren. Der Ansatz ist daher für das erfindungsgemäße Verfahren ungeeignet.

Patentansprüche

1) Verfahren zur Direkt- oder Umkehrbeschichtung von Substraten mittels eines Zweikomponentensystems, bestehend aus

a) einem gegebenenfalls ein inertes organisches Lösungsmittel und/oder einen Weichmacher enthaltenden, NCO-Gruppen aufweisenden Präpolymeren, welches durch Umsetzung eines Polyisocyanats mit einer Polyhydroxylverbindung mit einem Molekulargewicht zwischen 1000 und 4000 im NCO/OH-Äquivalentverhältnis zwischen 1,5:1 und 3:1 hergestellt wurde,

b) einem aromatischen Diamin als Kettenverlängerungsmittel, gegebenenfalls

c) einem weiteren inerten organischen Lösungsmittel, gegebenenfalls

d) Wasser sowie gegebenenfalls

c) Katalysatoren und/oder Pigmenten und weiteren an sich bekannten Zusatzstoffen,

durch Sprühauftrag, wobei das Äquivalentverhältnis der NCO-Gruppen des Präpolymeren (a) zu den Aminogruppen des Kettenverlängerungsmittels (b) zwischen 1:1 und 3:1 liegt, dadurch gekennzeichnet, daß man als NCO-Präpolymeres (a) ein solches auf Basis eines Polyesterpolyols aus

1. Adipinsäure und gegebenenfalls bis zu 10 Mol-% (bezogen auf gesamte Säurekomponente des Polyesters) an Phthalsäure und/oder Terephthalsäure,

2. einem Gemisch aus einem Glykol mit 4 bis 6 C-Atomen und einem weiteren, gegebenenfalls verzweigten, Glykol mit 2 bis 10 C-Atomen im Molverhältnis 1:9 bis 9:1, sowie gegebenenfalls

3. bis zu 12 Mol-%,bezogen auf Glykolkomponente des Polyesters, an Trimethylolpropan

einsetzt und ein aromatisches Diamin (b) mit einer solchen Reaktivität verwendet, daß ein Gemisch aus einer 50 Gew.-%igen Lösung der NCO-Präpolymerkomponente (a) in Toluol mit den Komponenten (b), (c), (d) und (e) bei 20°C 3 Minuten nach dem Vermischen eine Viskosität von 1000 bis 15 000 cP aufweist.

2) Verfahren nach Anspruch 1, dadurch gekennzeichnet, daß man ein NCO-Präpolymeres mit einem durchschnittlichen Molekulargewicht (Zahlenmittel) von 1200 bis 3000 einsetzt.

3) Verfahren nach Anspruch 1 oder 2, dadurch gekennzeichnet, daß man ein NCO-Präpolymeres mit einer Viskosität zwischen 1000 und 10 000 cP/20°C und 100 bis 8000 cP/70°C einsetzt.

4) Verfahren nach Anspruch 1 bis 3, dadurch gekennzeichnet, daß man als NCO-Präpolymeres ein solches auf Basis eines Adipinsäurepolyesters einsetzt, welcher unter Verwendung von 2 bis 4 Mol-%, bezogen auf Glykolkomponente des Polyesters, an Trimethylolpropan hergestellt worden ist.

0006174

5) Verfahren nach Anspruch 1 bis 4, dadurch gekennzeichnet, daß man als NCO-Präpolymeres ein solches auf Basis eines Adipinsäurepolyesters einsetzt, dessen Glykolkomponente aus 1,6-Hexandiol und Neopentylglykol besteht.

6) Verfahren nach Anspruch 1 bis 5, dadurch gekennzeichnet, daß man als Kettenverlängerungsmittel(b) 2,4- und/oder 2,6-Toluylendiamin einsetzt.

7) Verfahren nach Anspruch 1 bis 6, dadurch gekennzeichnet, daß man das Kettenverlängerungsmittel (b) in Form einer 5 bis 35 gew.-%igen Lösung in einem Lösungsmittel, welches frei von primären Hydroxylgruppen ist, einsetzt.

8) Verfahren nach Anspruch 7, dadurch gekennzeichnet, daß die Lösung des Kettenverlängerungsmittels (b) bis zu 20 Gew.-% an Wasser enthält.

9) Verfahren nach Anspruch 1 bis 8, dadurch gekennzeichnet, daß das Zweikomponentensystem 0,1 bis 8 Gew.-% eines Polyäthersiloxans mit einem Molekulargewicht zwischen 1000 und 5000 enthält.

10) Verfahren nach Anspruch 1 bis 9, dadurch gekennzeichnet, daß das Zweikomponentensystem mittels einer Spritzpistole mit Innenmischung auf das Substrat aufgesprüht wird.

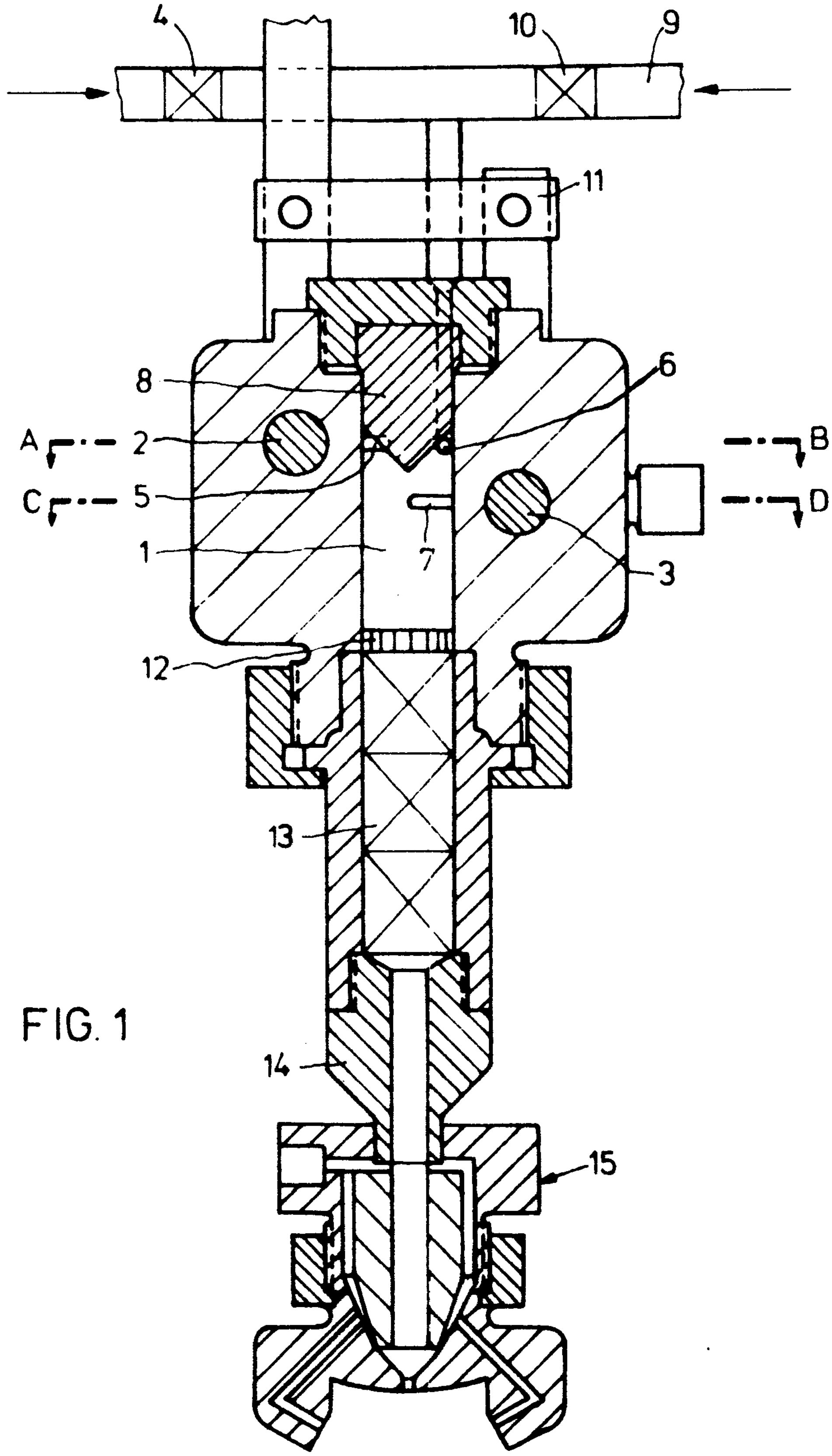


FIG. 1

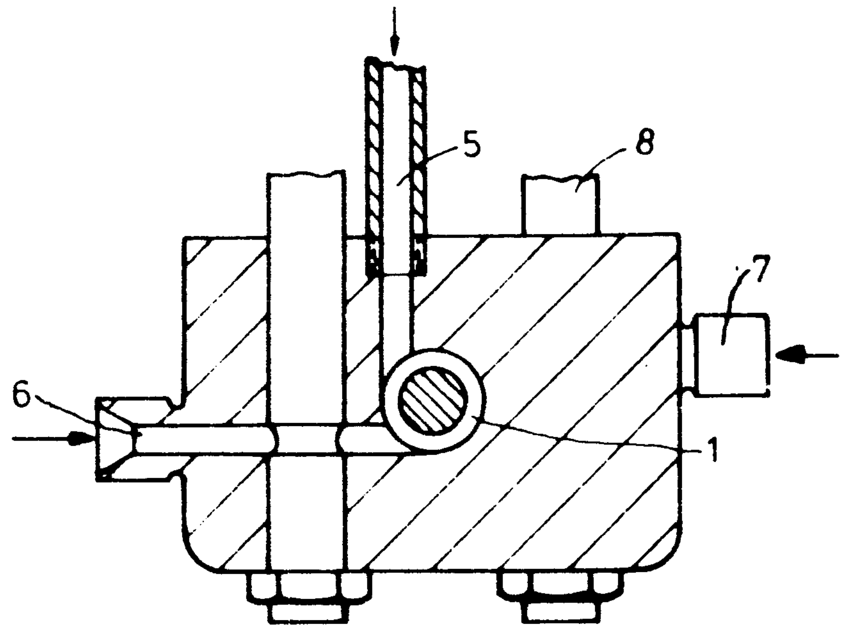


FIG. 2 (A-B)

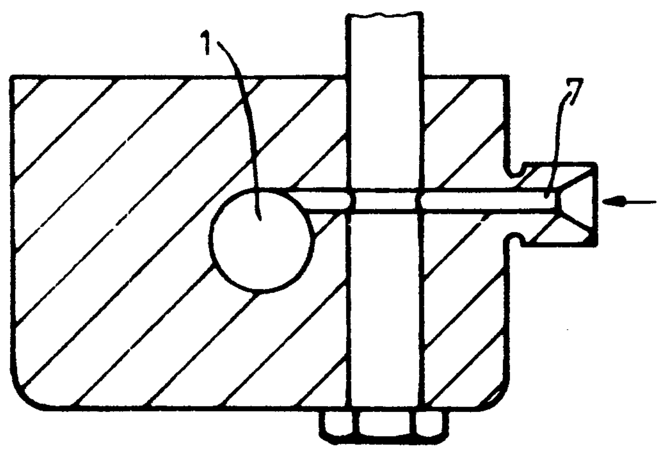


FIG. 3 (C-D)

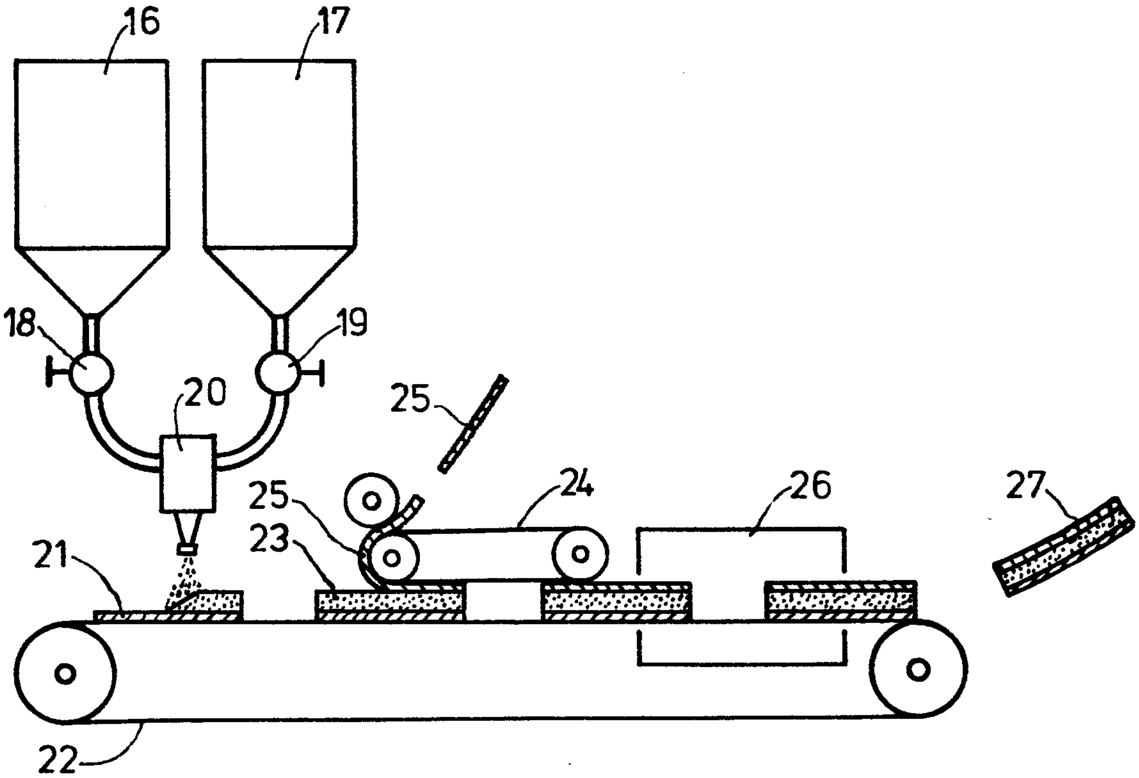


FIG. 4

Europäisches Patentamt

# EUROPÄISCHER RECHERCHENBERICHT

0006174

Nummer der Anmeldung

EP 79 10 1759

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| DA | DE - A - 1 570 524 (KUHLMANN)<br>* Seiten 12,13; Ansprüche 1,3,8; Seite 3, Zeilen 18-21; Seite 4, Zeilen 1-10 *<br>-- | 1,10 | C 08 G 18/42<br>C 09 D 3/72<br>C 08 G 18/10<br>D 06 N 3/14<br>D 06 M 15/52 |
| DA | DE - C - 1 240 656 (UNIROYAL)<br>* Spalte 10; Ansprüche 1,2; Spalte 4, Zeilen 28-54; Spalte 10, Zeilen 29-33 *<br>-- | 1 | RECHERCHIERTE SACHGEBIETE (Int. Cl.²)<br>C 08 G 18/42<br>18/10<br>18/12<br>C 09 D 3/72 |
| A | FR - A - 2 230 690 (VEBA-CHEMIE)<br>* Seite 15; Anspruch 1; Seite 2, Zeile 39 bis Seite 3, Zeile 10; Seite 3, Zeile 24 bis Seite 4, Zeile 15 *<br>-- | 1 | |
| A | FR - A - 1 351 319 (BAYER)<br>* Seite 4; Zusammenfassung, Punkte I1,I2; Seite 2, linke Spalte, Absatz 4 und rechte Spalte, Absatz 4 *<br>---- | 1,5 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-09-1979 | V. PUYMBROECK |